# EUROPÄISCHE PATENTSCHRIFT

(11) **EP 2 966 014 B1**
(45) Veröffentlichungstag und Bekanntmachung des Hinweises auf die Patenterteilung: **01.02.2017**
(21) Anmeldenummer: 14176505.7
(22) Anmeldetag: 10.07.2014
(51) Int. Cl.: B65G 53/48, B65G 53/08, B63B 27/22

(54) **Schneckenpumpe zum Fördern von Schüttgütern**
Screw pump for conveying bulk products
Pompe à vis hélicoïdale destinée à acheminer des produits en vrac

(43) Veröffentlichungstag der Anmeldung: 13.01.2016
(73) Patentinhaber: IBAU Hamburg Ingenieurgesellschaft, 20459 Hamburg (DE)
(72) Erfinder: Schirmer Juha, 22397 Hamburg (DE)
(74) Vertreter: Raffay & Fleck

(56) Entgegenhaltungen:
- EP-A1- 0 224 330
- EP-A1- 0 636 560

## Beschreibung

Die vorliegende Erfindung betrifft eine Schneckenpumpe zum Fördern von Schüttgütern.

Derartige Schneckenpumpen sind aus dem Stand der Technik zahlreich bekannt. So ist eine solche beispielsweise aus der EP 0 636 560 A1 bekannt, die den Oberbegriff des Anspruchs 1 offenbart.

Durch derartige Schneckenpumpen wird das Schüttgut im Zuführbereich aufgenommen über eine Förderschnecke weitergefördert und so der Druckbereich gegenüber dem Zuführbereich während der Förderung abgedichtet und das Schüttgut in den Druckbereich überführt, wo es aufgelockert und fluidisiert wird. Wird der Förderstrom unterbrochen oder die Förderung beendet, kann eine Abdichtung des Druckbereiches gegen den Zuführbereich durch entsprechende Verschlussmittel, beispielsweise Klappen, erfolgen.

Zum Abdichten zwischen einem Zuführbereich und einem Druckbereich sind neben Schneckenpumpen beispielsweise Zellradschleusen oder Zellradschleusen mit Doppelpendelklappen bekannt. Zur Verbesserung der Sperrwirkung kann Sperrluft eingesetzt werden. Derartige Vorrichtungen sind üblicherweise nur für kleine Fördermengen, beispielsweise im Bereich von 75 Tonnen pro Stunde geeignet. Schneckenpumpen können auch zur Entleerung von Schiffen eingesetzt werden. Häufig werden derartige Schiffe mit Fluidisierungsbetten im Laderaum ausgerüstet und wird derartig fluidisiertes Schüttgut einer solchen Schneckenpumpe zugeführt. Diese überführt das Schüttgut von einem Niedrigdruckbereich in der Ladekammer und dem zur Schneckenpumpe zuführenden Leitungssystem in einen Druckbereich höheren Druckes, üblich sind Überdrücke von 1 bis 5 bar, durch den das Schüttgut über ein entsprechendes Leitungssystem im fluidisierten Zustand entladen wird.

Bei einem solchen Einsatz von Schneckenpumpen treten vermehrt Probleme aufgrund der Eigenschaften des Schiffes auf. Nicht nur muss durch entsprechende Entladungsstrategien ein zu starkes Kippen des Schiffes verhindert werden, sondern sind auch durch die Kippbewegung des Schiffes und möglichen Wellengang besondere Anforderungen an das System bzw. die Pumpe zu stellen. Darüber hinaus ergeben sich weitere Anforderungen durch den Einbau in das Schiff.

Somit ist es Aufgabe der vorliegenden Erfindung, bestehende Schneckenpumpen für den Einsatz in Schiffsentladesystemen weiter zu entwickeln und die Einschleusevorrichtung für den Einsatz bei der Schiffsentladung zu verbessern.

Gelöst wird die Aufgabe durch eine Einschleusevorrichtung gemäß Anspruch 1. Die abhängigen Ansprüche geben vorteilhafte Weiterentwicklungen an.

Die erfindungsgemäße Einschleusevorrichtung zeichnet sich insbesondere dadurch aus, dass die in dem Druckbereich angeordnete Vorrichtung zum Einspeisen von Fluidisierungsmittel bei horizontal angeordneter Förderschnecke der Einschleusevorrichtung teilweise, überwiegend oder vollständig in einer horizontalen Ebene durch das Förderrohr oder mehreren horizontalen Ebenen durch das Förderrohr angeordnet sind.

Durch diese Maßnahme lässt sich nicht nur die Bauhöhe der Einschleusevorrichtung deutlich reduzieren und somit ganz erheblich Laderaum in dem Schiff gewinnen, dies dadurch, dass die gesamte Zuführung zur Einschleusevorrichtung relativ zum untersten Punkt der Einschleusevorrichtung niedriger angeordnet werden kann. Somit ist hier in Bezug auf die Bauhöhe die Höhe zwischen Zuführbereich der Einschleusevorrichtung oder deren Förderschnecke gemessen zum untersten Punkt der Einschleusevorrichtung zu verstehen.

Durch die erfindungsgemäße Anordnung der Vorrichtungen zum Einspeisen von Fluidisierungsmittel lässt sich jedoch auch eine zuverlässigere und vollständigere Fluidisierung erreichen. So werden nicht nur Toträume minimiert, sondern wird es auch möglich, das gesamte Volumen des Druckbereiches zu reduzieren. Darüber hinaus ist eine solche Anordnung insbesondere dann vorteilhaft, wenn, wie bei Schiffsentladungen häufig der Fall, nicht-kontinuierliche Zuführströme in den Zuführbereich verarbeitet werden müssen. Dabei ist durch die Einschleusevorrichtung nicht nur die Druckfestigkeit gegen Rückschläge vom Druckbereich in den Zuführbereich zu realisieren und dies bei variierenden oder teilweise unterbrochenen Förderströmen in den Zuführbereich, sondern ist trotz dessen auch eine ausreichende Fluidisierung im Druckbereich zu gewährleisten. Darüber soll vorteilhafterweise auch möglichst wenig Schüttgut unbewegt im Druckbereich zurückbleiben bzw. sich dort ablagern oder zirkulieren.

Der Druckbereich der Einschleusevorrichtung ist insbesondere ausgelegt, einen Überdruck von 1-5 bar gegenüber dem Atmosphärendruck aufweisen zu können, insbesondere bevorzugt wird hier ein Überdruck von 1,5 bis 2,5 bar.

Beim Schüttgut kann es sich beispielsweise um Flugasche, Kohle, Erze oder Metalloxid handeln. Aber auch Zement und andere Schüttgüter sind hier förderbar.

Bei der Austrittsöffnung des Förderrohrs zum Druckbereich hin kann es sich um ein einfaches Ende des Förderrohrs handeln, dass in den Druckbereich mündet. Der Zuführbereich ist üblicherweise so angeordnet, dass die Zuführrichtung senkrecht zur Erstreckung der Förderschnecke angeordnet ist. Eine Abdichtung gegen Rückschläge aus dem Druckbereich in den Zuführbereich wird zum einen, insbesondere bei ausbleibendem Förderstrom bzw. Schüttgutstrom in den Zuführbereich und weitgehend leergelaufener Förderschnecke durch die Verschlussvorrichtung gewährleistet, die die Öffnung des Förderrohres abzudichten vermag. Beim ausreichenden Fördern von Schüttgut durch die Förderschnecke wird die Abdichtung zum anderen durch das Schüttgut selbst und dessen Begrenzung durch das Förderrohr bewirkt.

Bei den Vorrichtungen zur Einspeisung von Fluidisierungsmittel kann es sich insbesondere um Düsen oder andere Öffnungen zur Einspeisung von unter Druck stehenden Gasen handeln. Bei den Fluidisierungsmitteln handelt es sich beispielsweise um aus dem Stand der Technik bekannte Fluidisierungsmittel, insbesondere Gase wie Stickstoff oder Mischungen von Gasen. Teilweise kann auch Luft verwendet werden. Das Fluidisierungsmittel wird in der Regel auf das Schüttgut abgestimmt.

Die Einschleusevorrichtung ist üblicherweise so ausgebildet, dass sie zur Anordnung mit horizontal angeordneter Förderschnecke ausgebildet ist.

Die erfindungsgemäße Einschleusevorrichtung ist insbesondere ausgebildet, die Förderschnecke mit 500 bis 3.000 Umdrehungen pro Minute zu rotieren, insbesondere mit 800 bis 1.500 Umdrehungen pro Minute, wobei es sich dabei um maximal vorgesehene Drehzahl handelt. Im unteren Lastbereich können auch davon verminderte Umdrehungszahlen gefahren werden. Die erfindungsgemäße Einschleusevorrichtung ist insbesondere eingerichtet 100 bis 1.000 Tonnen pro Stunde, insbesondere 300 bis 600 Tonnen pro Stunde zu fördern.

Bei einer erfindungsgemäßen Einschleusevorrichtung kann Schüttgut in den Zuführbereich zugeführt werden. Von diesem Ort wird es über mindestens eine Vorrichtung zum Einspeisen in den Druckbereich zum Zwecke des Fluidisierens und Beschleunigens in den Druckbereich überführt. Bei dieser mindestens einen Vorrichtung zum Einspeisen in den Druckbereich handelt es sich insbesondere um eine, ggf. um mehrere Förderschnecken. Insbesondere ist in den Vorrichtungen zum Einspeisen in den Druckbereich mindestens eine Förderschnecke enthalten. Derartige Förderschnecken sind insbesondere in Förderrohren angeordnet. So ist insbesondere je eine Förderschnecke in einem Förderrohr angeordnet. Die Durchmesser der Förderschnecke und des Förderrohres sind aufeinander abgestimmt, sodass eine Abdichtwirkung durch das durch die Förderschnecke geförderte Schüttgut gegen Rückschlagen von Fluidisierungsmittel aus dem Druckbereich in den Zuführbereich möglich ist. Zu dem Zweck der Abdichtung weist die Förderschnecke bzw. weisen Förderschnecke und Förderrohr auch eine entsprechende Mindestlänge auf, um eine ausreichende Dichtwirkung erzielen zu können. Die Förderschnecke kann auf verschiedene Weisen ausgeführt sein, so kann beispielsweise die Steigung gleichförmig oder geeignet zu einer Verdichtung des Schüttgutes ausgebildet sein.

Mit besonderem Vorteil ist die Förderschnecke einseitig gelagert, wie dies beispielsweise in der EP 0 636 560 A1 offenbart ist. Dazu weist die Förderschnecke insbesondere einseitig, insbesondere endnah, insbesondere an einem von dem Druckbereich abgewandten Ende eine Lagerhülse auf, die die Förderschnecke über eine Klemmung einseitig lagert. Diese Lagerhülse ist insbesondere auf der dem Druckbereich abgewandten Seite des Zuführbereiches angeordnet. Insbesondere grenzt sie, mit dazwischen liegenden Dichtelementen, an den Zuführbereich an.

Die erfindungsgemäße Einschleusevorrichtung weist insbesondere einen Druckbereich auf, der in Aufsicht auf die Auslassöffnung keine Einschnürungen in seinem Querschnitt aufweist.

Die Vorrichtungen zum Einspeisen von Fluidisierungsmittel sind außerdem teilweise so angeordnet, dass Fluidisierungsmittel durch sie mit Hauptbewegungsrichtung in einer horizontalen Ebene durch das Förderrohr einspeisbar ist. Mit besonderem Vorteil sind alle Vorrichtungen zum Einspeisen von Fluidisierungsmittel so angeordnet, dass Fluidisierungsmittel durch sie mit Hauptbewegungsrichtung in je einer horizontalen Ebene durch das Förderrohr einspeisbar ist. Durch derartige Vorkehrungen lässt sich nicht nur die Bauhöhe reduzieren, sondern das Totvolumen reduzieren und die Fluidisierung verbessern. Mit besonderem Vorteil sind die Vorrichtungen zum Einspeisen von Fluidisierungsmittel zumindest teilweise so angeordnet, dass die Hauptachse der Strömung durch die Vorrichtung in je einer horizontalen Ebene durch das Förderrohr liegt.

Mit besonderem Vorteil ist der Druckbereich so ausgebildet, dass er sich maximal 200 mm, insbesondere maximal 150 mm, besonders bevorzugt 60-120 mm unterhalb der Austrittsöffnung erstreckt. Relativ gesehen, wird es bevorzugt, wenn sich der Druckbereich maximal 75%, insbesondere maximal 60%, insbesondere 20-40% des Durchmessers des Förderrohres unterhalb der Austrittsöffnung erstreckt.

Mit besonderem Vorteil sind die Vorrichtungen zum Einspeisen von Fluidisierungsmitteln maximal 200 mm, insbesondere 150 mm, besonders bevorzugt maximal 100 mm unterhalb und/oder auf der Höhe der Austrittsöffnung angeordnet.

Die Vorrichtung zum Einspeisen von Fluidisierungsmittel ist in einem Bereich von plus minus 100 mm, insbesondere 50 mm um die Ebene der Austrittsöffnung angeordnet. Die Ebene der Austrittsöffnung erstreckt sich beispielsweise senkrecht zur Längserstreckung des Förderrohres und beispielsweise insbesondere vertikal. Sind nun die Vorrichtungen zum Einspeisen von Fluidisierungsmittel in einem Bereich von plus minus 100 mm um die Ebene der Austrittsöffnungen angeordnet, so sind diese bei Betrachtung in Richtung der Längserstreckung der Förderschnecke in Förderrichtung entweder vor oder hinter der Austrittsöffnung angeordnet, wobei diese Versetzung nach vorne bzw. hinten, gesehen ausgehend von der Austrittsöffnung aus, begrenzt ist durch 100 mm. Bei der Betrachtung der Anordnung der Vorrichtung zum Einspeisen von Fluidisierungsmittel wird insbesondere auf deren Öffnung, aus der das Fluidisierungsmittel austritt, abgestellt.

Durch eine solche Anordnung kann die Fluidisierung und die Auflockerung des Schüttgutes besonders effektiv und zuverlässig gestaltet und das Totvolumen bzw. die Ablagerung von Schüttgut im Druckbereich reduziert werden.

Mit besonderem Vorteil sind die Vorrichtungen zum Einspeisen von Fluidisierungsmittel zumindest teilweise in einem Bereich um die Ebene der Austrittsöffnung angeordnet, in dem sich das in den Druckbereich eingespeiste Schüttgut aufgrund eines durch die Förderschnecke bewirkten Impulses beim Austritt aus der Austrittsöffnung bewegt. Üblicherweise weist das aus der Austrittsöffnung austretende Schüttgut einen Drall auf, der durch die Bewegung der Förderschnecke induziert wurde. Aufgrund der darüber hinaus wirkenden Schwerkraft tritt das Schüttgut beispielsweise im unteren Bereich des Förderrohres mit einer tangentialen Geschwindigkeit aus dem Förderrohr aus. Dabei kann auch eine Geschwindigkeitsverteilung über die Fläche des Austrittes vorliegen. Insbesondere sind die Vorrichtungen zum Einspeisen von Fluidisierungsmittel somit in dem Bereich angeordnet, in den dieser Impuls bzw. die Geschwindigkeit das Schüttgut führt. Dadurch kann eine besonders effektive Auflockerung und Fluidisierung des eingeschleusten Schüttgutes erfolgen. Vorteilhafterweise sind die Vorrichtungen zum Einspeisen von Fluidisierungsmittel insbesondere mindestens zu einem Drittel, insbesondere mindestens hälftig in diesem Bereich angeordnet. Dabei ist bei der Beurteilung nicht allein auf die Anzahl der Vorrichtungen abzustellen, sondern vielmehr auf den von ihnen bewirkten oder bewirkbaren Fluidisierungsmittelstrom.

Die Vorrichtungen zum Einspeisen sind bei horizontaler Förderschnecke in einem Höhenbereich, der sich von maximal 100 mm, insbesondere maximal 50 mm unterhalb der Austrittsöffnung bis zur vertikalen Mitte der Austrittsöffnung erstreckt, zumindest mit 80% des bewirkten Fluidisierungsstroms oder vollständig in diesem Bereich angeordnet. Auch durch diese Maßnahme kann die Fluidisierung besonders vorteilhaft erfolgen, eine besonders zuverlässige Auflockerung erfolgen, der Totbereich reduziert und die Bauhöhe minimiert werden.

Mit besonderem Vorteil sind die Vorrichtungen zum Einspeisen von Fluidisierungsmittel zumindest teilweise in Richtung einer Senkrechten durch den Druckbereich und die Längsachse der Förderschnecke aus der zur Längsachse der Förderschnecke parallelen Orientierung geneigt angeordnet, insbesondere um 20-30°.

Mit besonderem Vorteil ist die Austrittsöffnung senkrecht zur Längserstreckung der Förderstrecke ausgebildet. Dadurch lässt sich ein besonders platzsparender Aufbau erreichen und die Abdichtung durch das Schüttgut in der Förderschnecke optimieren.

In der Regel wird die Einschleusevorrichtung zum Abdichten gegen eine Rückströmung des Fluidisierungsmittels vom Druckbereich in den Zuführbereich ausgebildet sein. Eine Rückströmung ist hier, insbesondere in Schalt- bzw. Abfahrphasen, nicht absolut zu verhindern, sondern es ist eine Rückströmung, insbesondere im Normalbetrieb, insofern zu verhindern, als dass ein Durchschlagen verhindert wird und der Druckunterschied aufrechterhalten werden kann und keine übermäßige Abnutzung am Förderrohr erfolgt.

Während Schalt- und insbesondere Abfahrphasen ist eine kurzzeitige Rückströmung indes zu tolerieren.

Mit besonderem Vorteil ist die Verschlussvorrichtung als Klappe ausgeführt. Eine solche Klappe lässt sich auf besonders einfache Weise realisieren und wirkt dennoch effizient. Die Klappe ist vorteilhafterweise als um eine Schwenkachse schwenkbare Klappe ausgebildet. Dabei ist die Schwenkachse insbesondere senkrecht zur Längserstreckung der Förderschnecke angeordnet und insbesondere oberhalb der Förderschnecke angeordnet. Die Klappe bzw. die Verschlussvorrichtung ist insbesondere mit einer Dämpfung ausgerüstet. Eine solche Dämpfung kann beispielsweise durch Stoßdämpfer oder andere dämpfende Elemente, wie beispielsweise Kolben mit entsprechender Drossel der in sie ein- und/oder ausströmenden Arbeitsmittel, wie Luft oder Öl, realisiert werden. Eine solche Dämpfung der Verschlussvorrichtung bzw. Klappe ermöglicht eine besonders zuverlässige Abdichtung und einen geringen Verschleiß auch bei variierenden Fördermengen. Zwar ist es aus dem Stand der Technik bekannt, derartige Klappen zu verwenden und sie mit weiteren Mitteln auszustatten, beispielsweise mit einer Vorrichtung zur Konstanthaltung des Drehmomentes um die Schwenkachse, doch ist eine Dämpfung nicht bekannt. Sie ist aber insbesondere in Kombination mit der erfindungsgemäßen Anordnung der Vorrichtungen zum Einspeisen von Fluidisierungsmitteln und insbesondere beim Einsatz in Schiffsentladern besonders vorteilhaft, da hier im Zusammenwirken eine besonders verschleißarme Abdichtung auch bei effizienter Fluidisierung und Auflockerung des eingeschleusten Schüttgutes bei schwankenden Zuführbedingungen gegeben ist. In der Regel wird eine solche Klappe auch mit zusätzlichen Gewichten in Richtung Abdichtung der Austrittsöffnung vorbelastet sein.

Vorteilhafterweise kann die Form der Klappe beispielsweise durch eine in Richtung der Austrittsöffnung ausgebildete Wölbung oder andere an dieser Klappe angeordneten oder in dieser Klappe realisierten Fließhilfen optimiert werden. Insbesondere können die Fließhilfen zur Beeinflussung des Dralls bzw. des Impulses des austretenden Schüttgutes verwendet und insbesondere in einer geschilderten Anordnung der Einspeisevorrichtungen besonders vorteilhaft wirken.

Weitere vorteilhafte Ausbildungen sollen beispielsweise an den folgenden Figuren rein schematisch und nicht beschreibend erläutert werden. Dabei zeigen:
- Fig. 1: einen Schnitt in seitlicher Ansicht auf einen Teil der erfindungsgemäßen Einschleusevorrichtung;
- Fig. 2: eine Frontalansicht auf die Austrittsöffnung mit davor angeordneter Klappe der Vorrichtung aus Fig. 1; und
- Fig. 3: einen horizontalen Schnitt durch die Vorrichtung aus Fig. 1 ausschnittsweise.

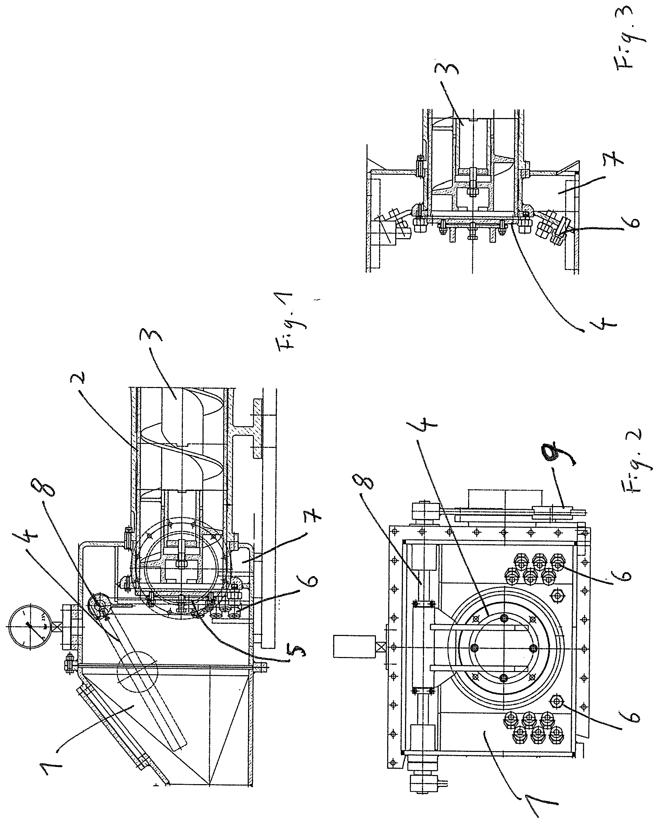

Fig. 1 zeigt eine Ansicht einer erfindungsgemäßen Vorrichtung im Schnitt unter seitlicher Ansicht. Zu erkennen ist eine Förderschnecke 3, die in einem Förderrohr 2 horizontal angeordnet ist. Ihre Längserstreckung ist dabei in der Darstellung horizontal angeordnet. Die Förderschnecke 3 endet in einer Austrittsöffnung 5. Jenseits der Austrittsöffnung 5 angeordnet ist ein Druckbereich 1. Die Austrittsöffnung 5 kann durch eine Klappe 4 verschlossen werden. Diese Klappe 4 ist um eine Achse 8 schwenkbar gelagert. Um die Austrittsöffnung 5 herum sind Düsen 6 zum Einschleusen von Fluidisierungsmittel angeordnet. Dazu ist hinter den Düsen 6 gelegen ein Luftraum 7 bzw. ein Raum zur Zuführung des Fluidisierungsmittels vorgesehen. Schüttgut kann in einem rechts des Bildausschnittes gelegenen Zuführbereich so zugeführt werden, dass es von der Förderschnecke in der Darstellung nach links in Richtung zur Austrittsöffnung 5 transportiert wird. Dort wird das Schüttgut in den Druckbereich 1 überführt und von den Düsen bzw. vom durch die Düsen 6 abgegebenen Fluidisierungsmittel aufgelockert und fluidisiert sowie abtransportiert in Richtung der in der Darstellung links befindlichen Öffnung des Druckbereiches 1. Die Klappe 4 ist mit Gewichten so vorbelastet, dass sie von sich selbst in eine Ruhelage, in der Darstellung senkrecht, verschwenkt und die Austrittsöffnung 5 verschließt. In der Darstellung ist sie geöffnet dargestellt. Die Öffnung der Klappe 4 wird durch das aus der Austrittsöffnung 5 herausgeschobene Schüttgut bewirkt. Versiegt der Förderström aus der Austrittsöffnung 5, klappt die Klappe 4 um die Achse 8 zurück und verschließt die Austrittsöffnung 5.

Fig. 2 zeigt eine Frontalansicht auf die durch die Klappe 4 verschlossene Austrittsöffnung 5 der Vorrichtung aus Fig. 1. Zu erkennen sind zahlreiche um die Austrittsöffnung angeordnete Düsen 6, sowie das zur Vorbelastung der Klappe 4 verwendete Gewicht 9. Zu erkennen ist, wie auch in Fig. 1, dass die Kammer, in der sich der Druckbereich 1 befindet, eine vergleichsweise begrenzte Erstreckung nach unten aufweist und insbesondere kaum nach unten über die Austrittsöffnung hinwegragt. Im genannten Ausführungsbeispiel ist sind es 10 cm, bei einem Durchmesser des Förderrohres von 30 cm. Wie schon in Fig. 2 angedeutet, sind die Düsen teilweise zur Mitte hin geneigt. Lediglich zwei Düsen 6 sind mit ihrer Orientierung parallel zur Längserstreckung der Förderschnecke angeordnet. Zu erkennen ist auch, dass sich die Düsen in einem Bereich befinden, der nach oben hin durch die Mittelebene durch das Förderrohr begrenzt ist und nach unten hin nur leicht über die untere Grenze des Förderrohres hinausragt.

Fig. 3 zeigt einen Teilschnitt horizontal durch die Vorrichtung der Fig. 1 in der Ebene der Mittelachse der Förderschnecke 3. Zu erkennen ist die die Austrittsöffnung verschließende Klappe 4.

Zu erkennen ist desweiteren die Neigung einiger der Düsen 6 zur vertikalen Ebene durch die Mittelachse der Förderschnecke 3 hin. Auch gezeigt ist der hinter den Düsen 6 befindliche Raum 7 zur Zuführung des Fluidisierungsmittels. Zu erkennen ist dabei auch, dass in horizontaler Richtung die Austrittsöffnung der Düsen 6 in Förderrichtung der Förderschnecke 3 leicht nach dem Passieren der Austrittsöffnung angeordnet sind.

Generell ist den Figuren deutlich zu entnehmen, dass sich der Druckbereich 1, der durch eine entsprechende Wandung, abgesehen von der Öffnung zum Weitertransport und der Austrittsöffnung als Verbindung zum Förderrohr, begrenzt ist, nur eine vergleichsweise geringe Erstreckung unterhalb des Förderrohres aufweist. Somit ist insbesondere der tiefste Punkt der Vorrichtung nur marginal unterhalb des Förderrohres gelegen, was eine vergleichsweise tiefe Einbringung der Förderschnecke in ein Schiff ermöglicht und damit auch die Absenkung der Zuführung zur Förderschnecke gegenüber den aus dem Stand der Technik bekannten Schneckenpumpen ermöglicht.

### Bezugszeichenliste

- 1: Druckbereich
- 2: Förderrohr
- 3: Förderschnecke
- 4: Klappe
- 5: Austrittsöffnung
- 6: Düse
- 7: Luftraum
- 8: Achse
- 9: Gewicht

## Patentansprüche

1. Einschleusevorrichtung aufweisend einen Druckbereich (1) und mindestens einen Zuführbereich zum Zuführen von Schüttgut und eingerichtet zum Einschleusen von in den Zuführbereich zugeführtem Schüttgut in den Druckbereich (1), aufweisend mindestens eine Vorrichtungen zum Einspeisen von Fluidisierungsmittel (6) in den Druckbereich (1) zum Fluidisieren und Beschleunigen des in den Druckbereich (1) eingeschleusten Schüttguts, aufweisend eine in einem sich zumindest auch zwischen Zuführbereich und Druckbereich erstreckenden Förderrohr (2) angeordnete Förderschnecke (3) zum Transport des Schüttgutes vom Zuführbereich zum Druckbereich (1), wobei das Förderrohr (2) zum Druckbereich eine Austrittsöffnung (5) aufweist, die durch eine Verschlussvorrichtung (4) verschließbar ist,
wobei die Einschleusevorrichtung geeignet ist, einen kontinuierlichen Schüttgutstrom in den Druckbereich (1) einzuschleusen und geeignet ist zur Einschleusung in den Druckbereich (1) von in den mindestens einen Zuführbereich zugeführten variierenden und unterbrochenen Schüttgutströmen in den Zuführbereich,
wobei die Vorrichtungen zum Einspeisen von Fluidisierungsmittel (6) so ausgebildet sind, dass bei horizontal angeordneter Förderschnecke (3) Fluidisierungsmittel durch sie mit überwiegend horizontaler Geschwindigkeitskomponente einspeisbar ist,
**dadurch gekennzeichnet, dass** bei horizontal angeordneter Förderschnecke (3) die Vorrichtungen zum Einspeisen von Fluidisierungsmittel zumindest teilweise in mindestens einer horizontalen Ebene durch das Förderrohr (2) angeordnet sind unddass die Vorrichtungen zum Einspeisen von Fluidisierungsmittel zumindest teilweise so angeordnet sind, dass Fluidisierungsmittel durch sie mit Hauptbewegungsrichtung in einer horizontalen Ebene durch das Förderrohr einspeisbar ist und
dass die Vorrichtungen zum Einspeisen in einem Bereich von +/-100 mm um die Ebene der Austrittsöffnung angeordnet sind und
dass die Vorrichtungen zum Einspeisen bei horizontaler Förderschecke in einem Höhenbereich, der sich von maximal 100 mm unterhalb der Austrittsöffnung bis zur vertikalen Mitte der Austrittsöffnung erstreckt, angeordnet sind.

2. Einschleusevorrichtung nach Anspruch 1, wobei die Vorrichtungen zum Einspeisen von Fluidisierungsmittel zumindest teilweise so angeordnet sind, dass die Hauptachse der Strömung durch die Vorrichtungen in einer horizontalen Ebene durch das Förderrohr liegt.

3. Einschleusevorrichtung nach einem der vorstehenden Ansprüche, wobei der Druckbereich sich maximal 200 mm unterhalb der Austrittsöffnung erstreckt.

4. Einschleusevorrichtung nach einem der vorstehenden Ansprüche, wobei die Vorrichtungen zum Einspeisen von Fluidisierungsmitteln maximal 200 mm unterhalb des Förderrohr angeordnet sind.

5. Einschleusevorrichtung nach einem der vorstehenden Ansprüche, wobei die Vorrichtungen zum Einspeisen zumindest teilweise in einem Bereich um die Ebene der Austrittsöffnung angeordnet sind, in den sich das in den Druckbereich eingespeiste Schüttgut auf Grund eines durch die Förderschnecke bewirkten Impuls beim Austritt aus der Austrittsöffnung bewegt.

6. Einschleusevorrichtung nach einem der vorstehenden Ansprüche, wobei die Austrittsöffnung senkrecht zur Längserstreckung der Förderschnecke ausgebildet ist.

7. Einschleusevorrichtung nach einem der vorstehenden Ansprüche, wobei sie zum Abdichten gegen eine Rückströmung des Fluidisierungsmittels vom Druckbereich in den Zuführbereich ausgebildet ist.

8. Einschleusevorrichtung nach einem der vorstehenden Ansprüche, wobei die Verschlussvorrichtung als Klappe ausgeführt ist.

9. Einschleusevorrichtung nach einem der vorstehenden Ansprüche, wobei die Klappe als um eine Schwenkachse schwenkbare Klappe ausgebildet ist und in ihrer Bewegung um die Schwenkachse gedämpft ist.

## Claims

1. An introduction device comprising a compression zone (1) and at least one feeding zone for feeding bulk material and arranged for introducing into the compression zone (1), bulk material fed into the feeding zone, comprising at least one device for conveying fluidising means (6) into the compression zone (1) for fluidising and accelerating the bulk material introduced into the compression zone (1), comprising a conveying screw (3) arranged in a conveying pipe (2) extending at least as well between the feeding zone and the compression zone, for transporting the bulk material from the feeding zone to the compression zone (1), wherein the conveying pipe (2) has an outlet opening (5) towards the compression zone, which is can be closed by a closing device (4),
wherein the introduction device is designed to introduce a continuous flow of bulk material into the compression zone (1) and is designed for introducing into the compression zone (1) variable and uninterrupted flows of bulk material, which had been conveyed into at east one feeding zone,
whereas the devices for conveying fluidising means (6) are designed in such a way that in case of a conveying screw (3) arranged horizontally, fluidising means can be conveyed therethrough with a mainly horizontal speed component,
**characterised in that** in case of a conveying screw (3) arranged horizontally, the devices for conveying fluidising means are arranged at least partially in at least one horizontal plane through the conveying pipe (2), and that the devices for conveying fluidising means are arranged at least partially in such a way that fluidising means can be conveyed therethrough with a main direction of movement in a horizontal plane through the conveying pipe and that the devices for conveying are arranged in a zone of +/-100 mm about the plane of the outlet opening and
that the devices for conveying with a horizontal screw in a height zone extend maximum 100 mm below the outlet opening up to the vertical centre of the outlet opening.

2. The introduction device according to claim 1, whereas the devices for conveying fluidising means are arranged at least partially in such a way that the main axis of flow through the devices lies in a horizontal plane through the conveying pipe.

3. The introduction device according to one of the previous claims, wherein the compression zone extends maximum 200 mm below the outlet opening.

4. The introduction device according to one of the previous claims, wherein the devices for conveying fluidising means are arranged maximum 200 mm below the conveying pipe.

5. The introduction device according to one of the previous claims, wherein that the devices for conveying are arranged at least partially in a zone about the plane of the outlet opening, in which the bulk material introduced into the compression zone moves under the impulse given by the conveying screw when exiting the outlet opening.

6. The introduction device according to one of the previous claims, whereas the outlet opening is arranged perpendicular to the longitudinal extension of the conveying screw.

7. The introduction device according to one of the previous claims, wherein it is designed for sealing against backflow of the fluidising means from the compression zone into the feeding zone.

8. The introduction device according to one of the previous claims, wherein the closing device is designed as a flap.

9. The introduction device according to one of the previous claims, wherein the flap is designed as a flap pivotable about the pivot axis and whose movement about the pivot axis is dampened.

## Revendications

1. Dispositif d'introduction comprenant une zone de compression (1) et au moins une zone d'alimentation pour amener du matériau en vrac et agencée pour introduire dans la zone de compression (1), du matériau en vrac introduit dans la zone d'alimentation, comprenant au moins un dispositif destiné à transporter les moyens de fluidisation (6) dans la zone de compression (1) pour la fluidisation et l'accélération de la matière en vrac introduite dans la zone de compression (1), comprenant une vis de transport (3) disposée dans une conduite de transport (2) s'étendant au moins aussi bien entre la zone d'alimentation et la zone de compression, pour transporter la matière en vrac de la zone d'alimentation vers la zone de compression (1), où la conduite de transport (2) présente une ouverture de sortie (5) en direction de la zone de compression, qui peut être fermée par un dispositif de fermeture (4),
où le décodeur d'introduction est conçu pour introduire un écoulement continu de matière en vrac dans la zone de compression (1) et est conçu pour introduire dans la zone de compression (1) des flux variables et ininterrompus de matière en vrac, qui ont été acheminés dans au moins une zone d'alimentation,
tandis que les dispositifs de transport de moyens de fluidisation (6) sont conçus de telle sorte que, dans le cas d'une vis de transport (3) agencée horizontalement, les moyens de fluidisation peuvent être acheminés à travers elle avec une composante de vitesse principalement horizontale, **caractérisé en ce que**, dans le cas d'une vis de transport (3) agencée horizontalement, les dispositifs de transport de moyens de fluidisation sont disposés au moins partiellement dans au moins un plan horizontal à travers la conduite de transport (2), et **en ce que** les dispositifs de transport de moyens de fluidisation sont disposés au moins en partie de telle sorte que des moyens de fluidisation puissent être transportés à travers celle-ci avec un sens de déplacement principal dans un plan horizontal à travers la conduite de transport et que les dispositifs de transport sont disposés dans une zone de +/- 100 mm autour du plan de l'ouverture de sortie et
que les dispositifs de transport avec une vis horizontale dans une zone de hauteur s'étendent au maximum 100 mm en dessous de l'ouverture de sortie jusqu'au centre vertical de l'ouverture de sortie.

2. Dispositif d'introduction selon la revendication 1, où les dispositifs de transport des moyens de fluidisation sont agencés au moins partiellement de telle manière que l'axe principal d'écoulement à travers les dispositifs se trouve dans un plan horizontal à travers la conduite de transport.

3. Dispositif d'introduction selon l'une quelconque des revendications précédentes, où la zone de compression s'étend au maximum 200 mm en dessous de l'ouverture de sortie.

4. Dispositif d'introduction selon l'une quelconque des revendications précédentes, où les dispositifs de transport de moyens de fluidisation sont disposés à une distance maximale de 200 mm en dessous de la conduite de transport.

5. Dispositif d'introduction selon l'une quelconque des revendications précédentes, où les dispositifs de transport sont disposés au moins partiellement dans une zone autour du plan de l'ouverture de sortie dans lequel le matériau en vrac introduit dans la zone de compression se déplace sous l'impulsion donnée par la vis de transport en quittant l'ouverture de sortie.

6. Dispositif d'introduction selon l'une quelconque des revendications précédentes, où l'ouverture de sortie est disposée perpendiculairement à l'extension longitudinale de la vis de transport.

7. Dispositif d'introduction selon l'une quelconque des revendications précédentes, où il est conçu pour assurer l'étanchéité contre le refoulement des moyens de fluidisation depuis la zone de compression vers la zone d'alimentation.

8. Dispositif d'introduction selon l'une des revendications précédentes, où le dispositif de fermeture est conçu comme un volet.

9. Dispositif d'introduction selon l'une quelconque des revendications précédentes, où le volet est sous forme d'un volet pivotant autour de l'axe de pivotement et dont le mouvement autour de l'axe de pivotement est amorti.
